# EUROPÄISCHE PATENTSCHRIFT

(11) **EP 3 709 121 B1**
(45) Veröffentlichungstag und Bekanntmachung des Hinweises auf die Patenterteilung: **21.12.2022**
(21) Anmeldenummer: 20161728.9
(22) Anmeldetag: 09.03.2020
(51) Int. Cl.: G05D 23/19, F24F 110/10, H01R 12/51

(54) **REGELKLEMMLEISTE ZUR REGELUNG VON HEIZ- ODER KÜHLEINRICHTUNGEN IN GEBÄUDEN**
CONTROL TERMINAL FOR CONTROLLING HEATING OR COOLING DEVICES IN BUILDINGS
BORNE PLATE DE RÉGULATION PERMETTANT DE RÉGULER DES DISPOSITIFS DE CHAUFFAGE OU DE REFROIDISSEMENT DANS DES BÂTIMENTS

(30) Priorität: 11.03.2019 DE 102019106103
(43) Veröffentlichungstag der Anmeldung: 16.09.2020
(73) Patentinhaber: TTO Thermotechnik d.o.o., 51218 Drazice (HR)
(72) Erfinder: Drljevic, Radisav, 81375 München (DE)
(74) Vertreter: Rings, Rolf

(56) Entgegenhaltungen:
- EP-A2- 0 520 827
- US-A- 5 495 887
- US-A1- 2008 160 799
- US-A1- 2013 252 444
- US-A1- 2017 030 593

## Beschreibung

Die vorliegende Erfindung bezieht sich auf eine Regelklemmleiste zur Regelung von Heiz- und/oder Kühleinrichtungen von einzelnen Räumen von Gebäuden, in welchen verschiedene elektronisch ansteuerbare Stellantriebe oder Stellglieder von den Heizeinrichtungen oder Kühleinrichtungen vorgesehen sind. Die Erfindung bezieht sich insbesondere auf solch eine Regelklemmleiste, welche eine Verbindung zwischen einem Raumthermostat oder Raumtemperatur-Regelungssystem und den jeweiligen in dem Raum vorhandenen Stellantrieben oder Stellgliedern ermöglicht, beispielsweise den Stellantrieben von Thermostatventilen von Heizkörpern, Stellgliedern von Klimaanlagen oder ähnlichem.

Zur Raumtemperaturregelung wurde im Stand der Technik bisher als ein Zwischenelement zwischen den elektrischen und den elektronischen Raumreglern eine Regelklemmleiste verwendet, welche die Funktion hat, die räumlichen Gegebenheiten und Komponenten so abzubilden und zu steuern, dass eine korrekte Einstellung der Soll-Temperatur des Raums jederzeit gewährleistet ist. Die im Stand der Technik bekannten Regelklemmleisten wurden dazu über Verkabelungen und Drähte mit einem in dem Raum direkt montierten Raumthermostat verbunden, der die Temperatur erfasst und ein Einstellorgan für die Soll-Temperatur beinhaltet. Die Regelklemmleiste wurde ferner mit jedem der Stellantriebe, beispielsweise einem Stellantrieb oder Motorantrieb für ein Verteilerventil einer Fußbodenheizung oder anderen derartigen Stellantrieben, in dem jeweiligen Raum verdrahtet. Dabei war es bisher notwendig, dass eine genaue Anpassung und Einstellung der jeweiligen Regelklemmleisten auf den verwendeten Thermostat und die eingebauten Stellantriebe der Heizungs- und Kühleinrichtungen des jeweiligen Raums vorgenommen wurde. Nur bei Berücksichtigung der exakten Positionen der Komponenten und der jeweiligen Verdrahtung der einzelnen Komponenten miteinander konnte mit solch einer konventionellen Regelklemmleiste eine Steuerung und Regelung der thermischen Aggregate in dem Raum erfolgen.

Nachteilig bei diesen bekannten Regelklemmleisten ist, dass die Verbindung zwischen den einzelnen Komponenten, wie dem Raumthermostat und den Stellantrieben, starr war und nicht ohne Umbau veränderbar war. Wenn eine solche Regelklemmleiste zusammen mit dem zugehörigen Raumthermostat einmal für einen spezifischen Raum installiert worden ist, konnte die Anpassung des Heiz- oder Kühlsystems des Raums nur mit großem Aufwand bewerkstelligt werden. Die Verdrahtung der einzelnen Komponenten und ein Hinzufügen von weiteren zusätzlichen Stellantrieben war daher nicht oder nur mit sehr hohem Aufwand möglich. Ein weiterer Nachteil der bisher im Stand der Technik bekannten derartigen Regelklemmleisten zur Regelung von Heizungs- und Kühlsystemen ist, dass die maximale Anzahl von anschließbaren Komponenten regelmäßig stark begrenzt war. Auch waren die Positionen und Verbindungswege derartiger Regelklemmleisten zu den zu regelnden Komponenten und zu den Sensoren festgelegt und strikt vorgegeben. Nicht zuletzt erforderte der Anschluss derartiger bekannter Regelklemmleisten auch einigen Aufwand durch den Monteur: Die einzelnen in dem Raum vorhandenen Komponenten der Heizungs- und Kühlsysteme mussten spezifisch in der Regelklemmleiste beim Anschließen angepasst werden. Sobald eine nachträgliche Abänderung in dem Raum erfolgte, war daher die korrekte Steuerung und Regelung der Raumtemperatur mit solchen festgelegten Regelklemmleisten nicht mehr gewährleistet.

Aus einem weiteren Stand der Technik nach US 5,495,887 ist ein Temperatursteuerungssystem für Gebäude mit einer Mehrzahl von unterschiedlichen Temperaturzonen bekannt, bei welchem eine ausgewählte einzelne Steuerzone als Referenz verwendet wird, um die anderen Zonen entsprechend gleich zu steuern, wobei eine zentrale Platine mit mehreren Eingängen und Ausgängen für die jeweiligen Temperatursensoren der einzelnen Zonen des Gebäudes vorhanden ist und die Steuerung ausgebildet ist, um von einer bestimmten ausgewählten Referenzsteuerzone auf eine andere Referenzsteuerzone umzuschalten, falls die korrekte Funktion eines Temperatursensors nicht mehr gegeben ist.

US 2008/0160799 A1 beschreibt eine elektrische Anschlussanordnung für Heizungs- und Klimaanlagen von Gebäuden mit einem Anschlussblock, der auf einer Platine über eine Steckverbindung angeschlossen werden kann, wobei an dem Anschlussblock die Anschlüsse für die elektrischen Verbindungen zu den Stellantrieben und Elementen der Heizungs- und Klimaanlagen vorhanden sind.

In US 2017/0030593 A1 ist ein modulares Anschlusselement für eine Mehrzahl von Zonen in einem Gebäude bei einem Heißwasserversorgungssystem beschrieben, bei weichem die Verkabelung durch ein schienenartiges Anschlusselement für die Aufnahme der Strommodule und Wechselrichtermodule vorgesehen wird, die auf die längliche Schiene befestigt werden können.

Vor diesem Hintergrund ist es die Aufgabe der vorliegenden Erfindung, eine Regelklemmleiste zur Regelung von Heiz- oder Kühleinrichtungen in einzelnen Räumen von Gebäuden vorzuschlagen, welche hinsichtlich der Anzahl, der Position und der Einstellung der mit der Klemmleiste zu verbindenden Komponenten verbessert ist und welche eine größere Variabilität bei dem Einsatz verschiedenartiger Stellantriebe erlaubt.

Diese Aufgabe wird mit einer Regelklemmleiste mit den Merkmalen von Anspruch 1 gelöst, welche eine Platine und eine darauf vorgesehene Steuereinheit aufweist.

Vorteilhafte Ausgestaltungen und Weiterbildungen der Erfindung sind Gegenstand der abhängigen Ansprüche.

Gemäß der Erfindung wird eine Regelklemmleiste zur Regelung von Heiz- oder Kühleinrichtungen von einzelnen Räumen von Gebäuden mit verschiedenen elektrisch oder elektronisch ansteuerbaren Stellantrieben oder Stellgliedern in dem Raum für die Regelung von insbesondere einer Raumtemperatur, um eine vorgestellte oder einstellbare Soll-Temperatur des Raums zu erhalten, vorgeschlagen, mit mindestens einem Eingang zum Anschluss eines Raumthermostats oder eines Raumtemperatursensors mit Raumthermostatfunktion und mit einer Mehrzahl von Ausgängen zum Anschluss von zu steuernden Stellantrieben oder Stellgliedern, wobei eine Platine mit einer ohne Eingriff in die Verdrahtung oder Verkabelung veränderbaren variablen Verbindungszuordnung von Eingängen und Ausgängen vorgesehen ist, um die Art und Positionen von angeschlossenen Komponenten des zu regelnden Raums abzubilden und zu variieren. Mit einer so veränderbaren Verbindungszuordnung in der Regelklemmleiste selbst kann auf unterschiedliche Anforderungen und Gegebenheiten der jeweiligen Raumverhältnisse sowie auf nachträgliche Änderungen einfach direkt an der Regelklemmleiste ohne größere Umbauten reagiert werden. Mit der Abänderung einer Verbindungszuordnung lassen sich auf einfache Weise ohne neue Verdrahtung oder Verkabelung auch Komponenten wie Stellantriebe austauschen, ohne dass die Regelung der Raumtemperatur beeinträchtigt wird. Eine solche Abänderung nachträglich nach der Erstinstallation ist auch ohne ein Anhalten des laufenden Betriebs erfindungsgemäß möglich. Die Regelklemmleiste hat ferner den Vorteil, dass eine größere Anzahl von Anschlüssen und Eingängen und Ausgängen ermöglicht wird, so dass mehr Komponenten als bisher in ein und derselben Regelklemmleiste integriert und berücksichtigt werden können. Außerdem ist mit solch einer Regelklemmleiste gemäß der Erfindung die Erstinstallation des Regelungssystems deutlich vereinfacht. Die Regelklemmleiste ist so gebildet, dass keine komplizierten elektrotechnischen Anpassungen in der Steuerung für das Einbauen unterschiedlicher Komponenten mehr erforderlich sind.

Nicht zuletzt hat die erfindungsgemäße Regelklemmleiste den Vorteil, dass die Zuordnung von den einzelnen Komponenten auch gezielt verändert werden kann, ohne dass in die Verdrahtung oder Verkabelung eingegriffen werden muss. Durch einfaches Umändern der Verbindungszuordnung an der Regelklemmleiste selbst können so auch andere Funktionalitäten umgesetzt werden: Beispielsweise kann ein System von einem Heizbetrieb auf einen Kühlbetrieb an der Regelklemmleiste einfach umgeändert werden. Auch bietet die erfindungsgemäße Regelklemmleiste die Möglichkeit eines Einbringens weiterer Funktionalitäten und Betriebsweisen: Mit dem einfachen Anschluss von weiteren Stellgliedern an die zentrale Regelklemmleiste lassen sich auch andere Regelungen als die reine Raumtemperaturregelung realisieren. Beispielsweise kann eine gezielte Ansteuerung von einzelnen Komponenten auf einfache Weise erfolgen, wenn beispielsweise durch einen Ausfall ein Stopp einer Pumpe einer Flächenheizung erforderlich ist oder falls in einer bestimmten Heizzone lokal gezielt eine stärkere Erhöhung der Temperatur gewünscht ist.

Erfindungsgemäß ist die Regelklemmleiste mit einer Platine der Steuereinheit mit einer Mehrzahl von Steckplätzen für Jumper oder Kurzschlussbrücken versehen. Durch solche Jumper lassen sich in Form von einfachen Steckverbindungen die einzelnen Verbindungszuordnungen speziell für jeden Raum herstellen und leicht verändern. Eine Änderung der Verdrahtung ist daher nicht mehr notwendig. Die Steuereinheit berücksichtigt die jeweiligen Anschlüsse und die damit verbundenen Steckplätze für Jumper. Durch Abändern der eingesteckten Jumper in den Steckplätzen lassen sich andere Zuordnungen beliebig und auf einfache Weise in der Regelklemmleiste direkt einstellen.

Gemäß einer weiteren vorteilhaften Ausgestaltung der Erfindung ist die Regelklemmleiste angepasst, mehrere verschiedene Heiz- oder Kühlzonen des jeweiligen Raums unterschiedlich zu regeln. Zu diesem Zweck kann die Steuereinheit in der Regelklemmleiste vorgesehen sein. Nichterfindungsgemäß können auch andere Komponenten in der Regelklemmleiste für eine unterschiedliche Regelung von verschiedenen Zonen eines Raums vorgesehen werden. Mit dieser Maßnahme können verschiedene Einstellungen auch lokal von einzelnen Zonen in dem Raum vorgenommen werden. Es ist sozusagen eine Mehrzonenraumregelung der Temperatur des Raums möglich.

Nach einer weiteren vorteilhaften Ausgestaltung der Erfindung sind zusätzliche Eingänge zum Anschluss von weiteren Sensoren, insbesondere einem Außentemperatursensor, Rauchsensor, Ultraschallsensor oder Strömungssensor, an der Regelklemmleiste vorgesehen. Durch einen Anschluss solcher zusätzlicher weiterer Sensoren, zusätzlich zu dem Raumtemperatursensor oder Raumthermostat, lassen sich weitere Funktionalitäten und eine verbesserte Betriebsweise umsetzen. Die Berücksichtigung der Erfassungswerte der zusätzlichen Sensoren kann vorteilhafterweise zur weiteren Optimierung und Anpassung der Regelung der Heiz- oder Kühleinrichtungen in dem Raum verwendet werden.

Weitere Vorteile, Merkmale und Aspekte der vorliegenden Erfindung werden im Folgenden mehr im Detail anhand von Ausführungsbeispielen unter Bezugnahme auf die beigefügten Zeichnungen beschrieben werden. In den Zeichnungen zeigen:
- Fig. 1: eine schematische Draufsicht auf ein erstes Ausführungsbeispiel einer erfindungsgemäßen Regelklemmleiste; und
- Fig. 2: eine Draufsicht auf ein zweites Ausführungsbeispiel einer erfindungsgemäßen Regelklemmleiste mit abgenommenem Gehäusedeckel.

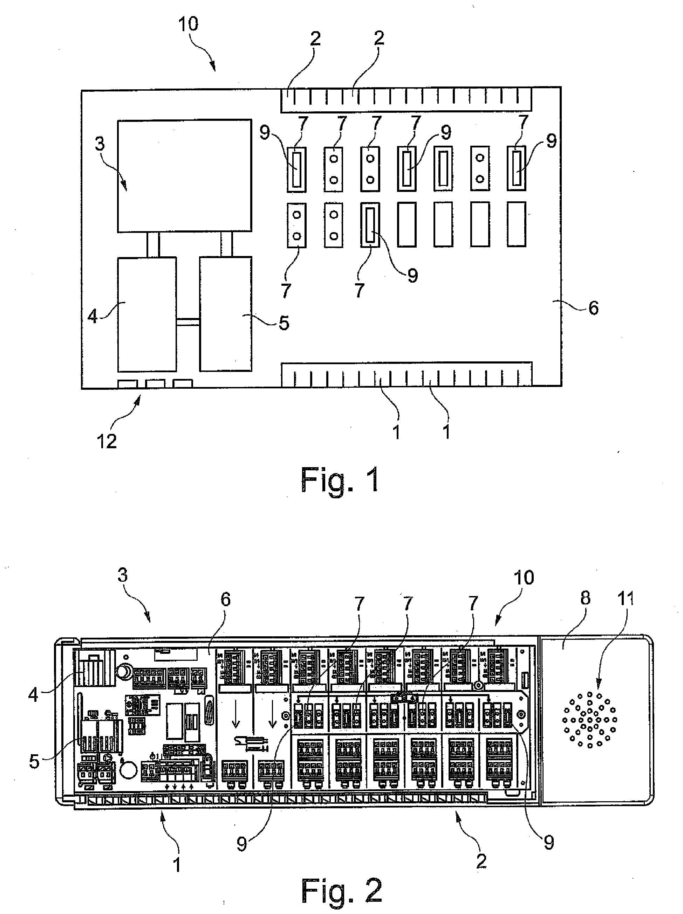

In der Fig. 1 ist in einer schematischen Draufsicht ein erstes Ausführungsbeispiel einer erfindungsgemäßen Regelklemmleiste 10 gezeigt. Die Regelklemmleiste 10 weist als Anschlüsse insbesondere eine Mehrzahl von Eingängen 1 und Ausgängen 2 auf, an welchen die Stellantriebe oder Stellglieder von Heiz- oder Kühleinrichtungen eines Raums eines Gebäudes angeschlossen werden. Die Regelklemmleiste 10 ist ferner mit einem Raumthermostat verbunden.

Die Komponenten der Regelklemmleiste 10 sind bei diesem Ausführungsbeispiel auf einer gemeinsamen einstückigen Platine 6 integriert vorgesehen, ebenso wie die Eingänge 1 und Ausgänge 2 für die Ansteuerung der Stellantriebe. Die Platine 6 und die Regelklemmleiste 10 sind gemäß einem Aspekt der Erfindung mit Mitteln versehen, die eine variable und veränderbare Verbindungszuordnung von Eingängen und Ausgängen erlauben, ohne dass ein Eingriff in die Verdrahtung oder Verkabelung der Regelklemmleiste oder des Systems erforderlich ist. Ferner ist die Regelklemmleiste 10 mit solch einem Regelungsprogramm in dem Programmmodul 4 versehen, das ausgebildet ist, die Art und die Positionen von angeschlossenen Komponenten des zu regelnden Raums des Gebäudes abzubilden und zu variieren. Um diese erfindungsgemäßen Funktionalitäten zu gewährleisten, ist bei dem Ausführungsbeispiel der Fig. 1 eine Mehrzahl von Steckplätzen 7 vorgesehen, in welchen Jumper 9 bzw. Kurzschlussbrücken gezielt für die jeweiligen Anpassungen an die Verbindungen und Komponenten in dem Raum einsteckbar sind. Die Jumper 9 werden gemäß der in der Hardware der Regelklemmleiste 10 hinterlegten Logik so eingesteckt, dass die entsprechenden vorhandenen Stellantriebe, beispielsweise ein Stellmotor für ein Thermostatventil eines Heizkörpers, einer Fußbodenheizung oder ähnliches, angesteuert werden können. Dabei werden zur Ansteuerung und zur Einhaltung der Soll-Temperatur in dem Raum die Eingänge 1 mit entsprechenden Raumthermostaten der Räume verbunden.

Durch die erfindungsgemäße Regelklemmleiste 10 können mehr und verschiedenartige Verbindungszuordnungen in variabler Art und Weise leichter realisiert werden, als es bei herkömmlichen derartigen Regelklemmleisten der Fall war. Der Anschluss und die Verdrahtung zum Raumthermostat und den Stellantrieben ist nicht mehr in einem Montageschritt starr festgelegt, sondern kann auch anschließend noch in beliebiger Art und Weise variabel verändert werden. Zu diesem Zweck ist auf der Platine 6 der Regelklemmleiste 10 eine Reihe von Steckplätzen 7 vorhanden, in welche die sogenannten Jumper 9 durch einfaches Einstecken und Abnehmen eingesetzt und verändert werden können. Diese Jumper 9 dienen der jeweiligen Zuordnung zu den Stellantrieben. Die Platine enthält sozusagen eine speziell auf den jeweiligen Raum hin angepasste Einstellung auf Grundlage der Form und Position der eingesteckten Jumper 7. Mit solch einer Form einer Regelklemmleiste 10 kann erfindungsgemäß die Steuerung und Regelung der thermischen Komponenten des Gebäuderaums weiter erheblich verbessert werden: Die Verbindung zu den einzelnen Stellantrieben oder Komponenten wie Sensoren ist nicht mehr starr, sondern lässt sich in der Regelklemmleiste 10 selbst leicht über entsprechendes Umstecken der Jumper 9 verändern. Auch lassen sich so einfach zusätzliche und weitere Komponenten anschließen, ohne dass das System in der Verkabelung oder in der Hardware verändert werden muss. Nicht zuletzt kann mit der erfindungsgemäßen Regelklemmleiste 10 auch in einem laufenden Betrieb unter Strom eine Anpassung und Änderung der einzelnen Komponenten erfolgen. Bei bisher bekannten derartigen Regelklemmleisten war dies nicht möglich. Dadurch ist es mit der Erfindung möglich, zum Beispiel für Verteiler derartige Regelklemmleisten 10 vorzumontieren und auf die in dem Raum zu montierenden Komponenten wie Stellantriebe oder Sensoren hin in der Fabrikation schon anzupassen. Nach einer Lieferung und Montage in dem Verteilerschrank ist die Regelklemmleiste sozusagen schon in der Grundlage auf den jeweiligen Raum hin angepasst und vormontiert. Der Monteur vor Ort muss nur noch die Einstellung auf die aktuellen Betriebsbedingungen hin vornehmen. Dies erfolgt dann durch einfaches Umstecken der Jumper 9 in den Steckplätzen 7 der Regelklemmleiste 10.

Die Fig. 2 zeigt in einer Vorderansicht ein zweites Ausführungsbeispiel einer erfindungsgemäßen Regelklemmleiste 10 mit einem Gehäuse 8 und abgenommenem Deckel. Das zweite Ausführungsbeispiel umfasst ebenso eine Regelklemmleiste 10 mit einer zentralen Platine 6, auf welcher die einzelnen Komponenten und die Steuereinheit und Steckverbinder 7 für die Jumper 9 integriert in kompakter Bauweise vorgesehen sind. Die Jumper 9 sind entsprechend den Gegebenheiten und der Anzahl und Form von Stellantrieben der Klima- und Heizeinrichtungen in dem Raum so in den Steckplätzen 7 eingesteckt.

## Patentansprüche

1. Regelklemmleiste (10), aufweisend eine Platine (6) und eine auf der Platine (6) vorgesehene Steuereinheit (3), wobei die Regelklemmleiste (10) zur Regelung von Heiz- oder Kühleinrichtungen von einzelnen Räumen von Gebäuden mit verschiedenen elektrisch oder elektronisch ansteuerbaren Stellantrieben oder Stellgliedern in einem Raum für die Regelung einer Raumtemperatur eingerichtet ist, um eine voreingestellte oder einstellbare Soll-Temperatur des Raumes zu erhalten, mit mindestens einem Eingang (1) zum Anschluss eines Raumthermostats des Raums oder Raumtemperatursensors des Raums mit Raumthermostatfunktion und mit einer Mehrzahl von Ausgängen (2) zum Anschluss von zu steuernden Stellantrieben oder Stellgliedern, **dadurch gekennzeichnet, dass** die Platine (6) der Steuereinheit (3) mit einer ohne Eingriff in die Verdrahtung oder Verkabelung veränderbaren variablen Verbindungszuordnung zwischen dem mindestens einen Eingang (1) des Raumthermostats oder Raumtemperatursensors und den Ausgängen (2) für die Stellantriebe oder Stellglieder vorgesehen ist, um die Art und Positionen von angeschlossenen Komponenten des zu regelnden Raumes für die Regelung des Raumes abzubilden und zu variieren, wobei die Platine (6) der Steuereinheit (3) dafür eine Mehrzahl von Steckplätzen (7) für Jumper (9) oder Kurzschlussbrücken zwischen dem mindestens einen Eingang (1) und den Ausgängen (2) aufweist, und wobei die Steuereinheit (3) dazu eingerichtet ist, die jeweiligen Anschlüsse und die damit verbundenen Steckplätze zu berücksichtigen, sodass sich durch Abändern der eingesteckten Jumper bzw. Kurschlussbrücken in den Steckplätzen andere Zuordnungen beliebig und auf einfache Weise in der Regelklemmleiste direkt einstellen lassen.

2. Regelklemmleiste (10) nach Anspruch 1, **dadurch gekennzeichnet, dass** die Steuereinheit (3) weiter dazu eingerichtet ist, mehrere verschiedene Heiz- oder Kühlzonen des Raumes unterschiedlich zu regeln.

3. Regelklemmleiste (10) nach einem der vorangegangenen Ansprüche, **dadurch gekennzeichnet, dass** zusätzliche Eingänge (1) zum Anschluss von weiteren Sensoren für die Regelung der Heiz- oder Kühleinrichtungen des jeweiligen Raumes, insbesondere einem Außentemperatursensor, Rauchsensor, Ultraschallsensor oder Strömungssensor, vorgesehen sind.

## Claims

1. Regulator terminal strip (10), having a printed circuit board (6) and a control unit (3) provided on the printed circuit board (6), wherein
the regulator terminal strip (10) is set up to regulate heating or cooling devices of individual rooms of buildings with different electrically or electronically switchable actuators or control elements in a room for regulating a room temperature, in order to obtain a preset or adjustable target temperature of the room, with at least one input (1) for connecting a room thermostat of the room or room temperature sensor of the room with room thermostat function and with a plurality of outputs (2) for connecting actuators or control elements to be controlled, **characterised in that** the printed circuit board (6) of the control unit (3) is provided with a connection allocation, which is changeable and variable and which does not engage in the wiring or cabling, between the at least one input (1) of the room thermostat or room temperature sensor and the outputs (2) for the actuators or control elements, in order to reproduce and vary the type and positions of connected components of the room to be regulated, to regulate the room, wherein the printed circuit board (6) of the control unit (3) has, for this purpose, a plurality of slots (7) for jumpers (9) or short circuit bars between the at least one input (1) and the outputs (2), and wherein the control unit (3) is set up to consider the respective connections and the slots connected thereto, with the result that, by modifying the inserted jumpers or short circuit bars in the slots, other allocations can be set arbitrarily and simply, directly in the regulator terminal strip.

2. Regulator terminal strip (10) according to claim 1, **characterised in that** the control unit (3) is further set up to regulate several different heating or cooling zones of the room differently.

3. Regulator terminal strip (10) according to one of the preceding claims, **characterised in that** additional inputs (1) are provided for connecting further sensors for regulating the heating or cooling devices of the respective room, in particular an external temperature sensor, smoke sensor, ultrasound sensor or flow sensor.

## Revendications

1. Bornier de régulation (10), présentant une platine (6) et une unité de commande (3) prévue sur la platine (6), dans lequel
le bornier de régulation (10) est conçu pour la régulation d'installations de chauffage ou de refroidissement de pièces individuelles de bâtiments avec différents actionneurs ou éléments de réglage à commande électrique ou électronique dans une pièce pour la régulation d'une température ambiante, afin d'obtenir une température de consigne préréglée ou réglable de la pièce, avec au moins une entrée (1) pour le raccordement d'un thermostat ambiant de la pièce ou d'un capteur de température ambiante de la pièce avec fonction de thermostat ambiant et avec une pluralité de sorties (2) pour le raccordement d'actionneurs ou d'éléments de réglage à commander, **caractérisée, en ce qu'**il est prévu une platine (6) de l'unité de commande (3) avec une affectation de liaison variable, modifiable sans intervention dans le câblage ou le câblage, entre l'au moins une entrée (1) du thermostat d'ambiance ou du capteur de température ambiante et les sorties (2) pour les servomoteurs ou les organes de réglage, afin de représenter et de faire varier le type et les positions de composants raccordés de la pièce à réguler pour la régulation de la pièce, la platine (6) de l'unité de commande (3) présentant à cet effet une pluralité d'emplacements d'enfichage (7) pour des cavaliers (9) ou des ponts de court-circuit entre l'au moins une entrée (1) et les sorties (2), et l'unité de commande (3) étant conçue pour tenir compte des raccordements respectifs et des emplacements d'enfichage qui y sont reliés, de sorte qu'il est possible, en modifiant les cavaliers ou les ponts de court-circuit enfichés respectivement, d'obtenir un système de régulation de la température de la pièce, les autres affectations peuvent être réglées directement dans le bornier de régulation, de manière simple et à volonté, en modifiant les cavaliers de court-circuit dans les emplacements de connexion.

2. Bornier de régulation (10) selon la revendication 1, **caractérisé en ce que** l'unité de commande (3) est en outre agencée pour réguler différemment plusieurs zones de chauffage ou de refroidissement différentes de la pièce.

3. Bornier de régulation (10) selon l'une des revendications précédentes, **caractérisé en ce que** des entrées supplémentaires (1) sont prévues pour le raccordement d'autres capteurs pour la régulation des installations de chauffage ou de refroidissement de la pièce concernée, en particulier un capteur de température extérieure, un capteur de fumée, un capteur à ultrasons ou un capteur de flux.
